# EUROPEAN PATENT APPLICATION

(11) **EP 4 629 032 A1**
(43) Date of publication of application: **08.10.2025**
(21) Application number: 24759654.7
(22) Date of filing: 20.02.2024
(51) Int. Cl.: G06F 3/01

(54) **GLASSES, INSTRUCTION ACQUISITION METHOD, AND RELATED DEVICE**

(30) Priority: 21.02.2023 CN 202310188493
(71) Applicant: Huawei Technologies Co., Ltd., Shenzhen, Guangdong 518129 (CN)
(72) Inventor: LI, Ting, Shenzhen, Guangdong 518129 (CN); XU, Qiang, Shenzhen, Guangdong 518129 (CN); LIU, Zhe, Shenzhen, Guangdong 518129 (CN); YUAN, Qiyun, Shenzhen, Guangdong 518129 (CN); YU, Luo, Shenzhen, Guangdong 518129 (CN); WU, Shanshan, Hangzhou, Zhejiang 310058 (CN); XIANG, Yudi, Hangzhou, Zhejiang 310058 (CN); LIU, Huiting, Hangzhou, Zhejiang 310058 (CN)
(74) Representative: Gill Jennings & Every LLP
(86) International application number: PCT/CN2024/077693
(87) International publication number: WO 2024/174977

(57) **Abstract**

Glasses, an instruction obtaining method, and a related device may be applied to the field of smart wearable devices. The glasses include a first element disposed on a frame temple and a processor, and the first element is configured to: when a control interface is displayed to a user, obtain a first rotation operation input by the user, where the control interface includes a plurality of objects for the user to select; and the processor is configured to generate a first instruction corresponding to the first rotation operation, where the first instruction instructs to change a selected object in the control interface. An operation obtained via the first element is a rotation operation, so that a degree of freedom of interaction of the rotation operation is high, and scalability is strong. This facilitates input of more control instructions. **In** addition, when the user inputs the rotation operation, the control interface is displayed to the user. This helps assist the user in determining a control instruction input by the user, to further improve user stickiness in this solution.

## Description

This application claims priority to Chinese Patent Application No. 202310188493.5, filed with the China National Intellectual Property Administration on February 21, 2023 and entitled "GLASSES, INSTRUCTION OBTAINING METHOD, AND RELATED DEVICE", which is incorporated herein by reference in its entirety.

### TECHNICAL FIELD

This application relates to the field of computer technologies, and in particular, to glasses, an instruction obtaining method, and a related device.

### BACKGROUND

Smart glasses are easy to use and have a small size, so that the smart glasses can provide great convenience for people's life. The smart glasses are one of promising wearable devices in recent years. As the smart glasses are increasingly popular, more functions can be implemented by the smart glasses. Accordingly, more interaction requirements are brought by the functions. Therefore, an interaction solution for the smart glasses needs to be urgently launched.

### SUMMARY

Embodiments of this application provide glasses, an instruction obtaining method, and a related device. An operation obtained via a first element is a rotation operation, so that a degree of freedom of interaction of the rotation operation is high, and scalability is strong. This facilitates input of more control instructions. In addition, when the rotation operation input by a user is obtained via the first element on a frame temple, a control interface is displayed to the user. This helps assist the user in determining a control instruction input by the user, to further improve user stickiness in this solution.

To resolve the foregoing technical problem, embodiments of this application provide the following technical solutions.

According to a first aspect, an embodiment of this application provides glasses, to apply a computer technology to the field of smart wearable devices. The glasses include a first element disposed on a frame temple and a processor, and the first element is configured to: when a control interface is displayed to a user, obtain a first rotation operation input by the user, where the control interface includes a plurality of objects for the user to select; and the processor is configured to generate a first instruction corresponding to the first rotation operation, where the first instruction instructs to change a selected object in the control interface. For example, in an implementation, if the glasses may be VR glasses, AR glasses, or MR glasses, the control interface may be displayed in a virtual interface. In another implementation, the glasses may establish a communication connection to another electronic device (for ease of description, referred to as "a target electronic device" subsequently). A display interface is configured in the target electronic device, and the control interface may be displayed on the target electronic device.

In this implementation, when the control interface is displayed to the user, the first rotation operation input by the user is obtained via the first element on the frame temple, and the processor generates the first instruction corresponding to the first rotation operation. The first instruction instructs to change the selected object in the control interface. According to the foregoing solution, an interaction solution for the smart glasses is provided. An operation obtained via the first element is a rotation operation, so that a degree of freedom of interaction of the rotation operation is high, and scalability is strong. This facilitates input of more control instructions. In addition, when the rotation operation input by the user is obtained via the first element on the frame temple, the control interface is displayed to the user. This helps assist the user in determining a control instruction input by the user, to further improve user stickiness in this solution.

In a possible implementation, the glasses further include a lens, the frame temple is connected to the lens through a second element, and a distance between the first element and the second element is greater than 0 millimeters and less than or equal to 40 millimeters, that is, the second element is a connection element between the frame temple and the lens. For example, the second element may include a hinge, configured to implement a hinge connection between the frame temple and the lens. For another example, the second element may include a lens frame that wraps the lens, and the lens frame and the frame temple are integrally formed. For another example, the second element includes a hinge and a lens frame that wraps the lens, and the frame temple is connected, through a hinge connection, to the lens frame that wraps the lens. "The distance between the first element and the second element is greater than 0 millimeters and less than or equal to 40 millimeters" may also be understood as follows: The frame temple may include two ends, where one end close to the second element (that is, close to the lens) is referred to as a first end, and a distance between the first element and the first end is greater than 0 millimeters and less than or equal to 40 millimeters.

In this implementation, the distance between the first element and the second element is greater than 0 millimeters and less than or equal to 40 millimeters. To be specific, the first element may be far away from the hair of the user, to avoid catching the hair of the user. In addition, the user cannot see an element on the frame temple, and in this case, that the first element is disposed at one end of the lens helps the user locate the first element via the second element, that is, helps the user find the first element. This brings more convenience to the user.

In a possible implementation, the distance between the first element and the second element may be greater than or equal to 20 millimeters and less than or equal to 30 millimeters.

In a possible implementation, the first element protrudes on a first side of the frame temple and does not protrude on a second side of the frame temple, the first side and the second side are respectively an upper side and a lower side of the frame temple, and a sensor is disposed on the second side of the frame temple; and the sensor is configured to obtain a pressing operation input by the user. If the first side is the upper side of the frame temple, the second side is the lower side of the frame temple. If the first side is the lower side of the frame temple, the second side is the upper side of the frame temple. For example, the sensor may be a pressure sensor, a touch sensor, or a sensor of another type.

In this implementation, when the user inputs a rotation operation via the first element 300, the user generally places a thumb and an index finger on the upper side and the lower side of the frame temple respectively. In this case, the first element 300 is disposed as protruding on the first side of the frame temple, and the sensor configured to obtain the pressing operation is disposed on the second side of the frame temple, so that the user can input more types of operations via the glasses. This facilitates input of more types of control instructions. In addition, the user does not need to adjust a gesture, so that fatigue caused by gesture adjustment of the user is avoided. In addition, because the user does not need to adjust the gesture, re-searching for an element location caused by gesture switching is avoid, so that user stickiness is improved in this solution.

In a possible implementation, the first element is a knob, a trackball, a combination of a knob and a trackball, or another element that can obtain the rotation operation input by the user. In this implementation, a plurality of specific representation forms of the first element are provided, so that implementation flexibility of this solution is extended.

In a possible implementation, the first element is a trackball, the control interface is displayed in a form of a sphere or a spheroid, and the plurality of objects are displayed on a surface of the sphere or the spheroid. Optionally, the selected object is located at a visual center location in the control interface in the form of a sphere or a spheroid. For example, when obtaining the rotation operation input by the user via the trackball (that is, an example of the first element), the processor may obtain a rotation direction of the rotation operation, and generate a first rotation instruction corresponding to the rotation direction, where the first rotation instruction instructs the glasses to rotate the control interface in the form of a sphere or spheroid, or the processor sends the first rotation instruction to the target electronic device, where the first rotation instruction instructs the target electronic device to rotate the control interface in the form of a sphere or spheroid. That is, the trackball is rotated in a specific direction, and the sphere or the spheroid may also rotate in the direction. Correspondingly, an object located at the visual center location also changes, so that the selected object in the control interface is changed.

In this implementation, because the trackball has a three-dimensional structure of a sphere, if the control interface is displayed in the form of a sphere or a spheroid, the control interface seen by the user and the trackball touched by the user are unified, and this helps reduce difficulty in a process of selecting an object by the user.

In a possible implementation, the first element is a trackball, and the first rotation operation includes a first rotation operation in a primary direction and a first rotation operation in a secondary direction; and the plurality of objects in the control interface include an object in a first direction and an object in a second direction, the first rotation operation in the primary direction is used to trigger scrolling of the object in the first direction, the first rotation operation in the secondary direction is used to trigger scrolling of the object in the second direction, and a quantity of objects in the first direction is greater than a quantity of objects in the second direction. Optionally, the quantity of objects in the second direction in the control interface is preset. When an object needs to be added in the control interface, the object may be added in the first direction.

In this implementation, although the trackball has a universal operation capability, that is, the trackball may roll in any direction, on the glasses, because of differences of gestures and finger flexibility of the user, different directions control capabilities for the trackball are different. Therefore, the rotation operation input via the trackball is classified into the rotation operation in the primary direction and the rotation operation in the secondary direction, the first rotation operation in the primary direction is used to trigger scrolling of the object in the first direction, the first rotation operation in the secondary direction is used to trigger scrolling of the object in the second direction, and the quantity of objects in the first direction is greater than the quantity of objects in the second direction. This helps the user select an object more conveniently.

In a possible implementation, because the trackball has the universal operation capability, and an identified first rotation operation may include two first rotation operations in the primary direction and two first rotation operations in the secondary direction, the processor needs to identify the rotation operation input by the user, to determine that the rotation operation input by the user is a specific rotation operation of the four rotation operations. The first rotation operation in the primary direction corresponds to a first angle range for rotation of the trackball, the first rotation operation in the secondary direction corresponds to a second angle range for rotation of the trackball, and the first angle range is greater than the second angle range. In other words, when the processor identifies that the rotation angle of the trackball is in the first angle range, the rotation operation is identified as a rotation operation in the primary direction; when the processor identifies that the rotation angle of the trackball is in the second angle range, the rotation operation is identified as a rotation operation in the secondary direction; and "the rotation angle for rotation of the trackball" may also be understood as "the rotation angle of the rotation operation".

In this implementation, the angle range corresponding to the rotation operation in the primary direction is larger, so that difficulty in inputting the rotation operation in the primary direction by the user can be reduced. Use duration of the rotation operation in the primary direction is longer. Therefore, this is equivalent to reducing difficulty in inputting the rotation operation by the user.

In a possible implementation, the first element is a trackball; and the first element is further configured to: when a browsing interface is displayed to the user, obtain, via the first element, a second rotation operation input by the user, where the second rotation operation includes a second rotation operation in a primary direction and a second rotation operation in a secondary direction, the second rotation operation in the primary direction is used to trigger a first operation on the browsing interface, the second rotation operation in the secondary direction is used to trigger a second operation on the browsing interface, and the first operation is more frequently used than the second operation.

In this implementation, because the user has different control capabilities on the trackball in different directions, when the browsing interface is displayed to the user, the rotation selection operation input by the user via the trackball may also be classified into the second rotation operation in the primary direction and the second rotation operation in the secondary direction. The operation, on the browsing interface, triggered by the second rotation operation in the primary direction is more frequently used. This helps the user browse the interface more conveniently, to improve user stickiness in this solution.

In a possible implementation, the first element is further configured to: when a browsing interface is displayed to the user, obtain, via the first element, a third rotation operation input by the user, where when the third rotation operation is projected onto a second plane, the third rotation operation is a clockwise operation or a counter-clockwise operation, and the second plane is a surface on which the first element intersects the frame temple, that is, when the second plane is used as a reference, the third rotation operation is a clockwise operation or a counter-clockwise operation; and the processor is further configured to generate a second instruction corresponding to the third rotation operation, where the second instruction instructs to scroll content in the browsing interface.

In this implementation, when the user inputs an upward, downward, leftward, or rightward rotation operation via the trackball, when the trackball is rotated upward, downward, leftward, or rightward from a center point to a specific angle, a finger touches the plane on which the first element 300 intersects the frame temple 200, and consequently the finger is blocked. In this case, the user needs to lift the finger to return to the center point and roll the trackball again. As a result, when the user uses the browsing interface, the user frequently moves a location of the finger. In this solution, when the browsing interface is displayed to the user, the third rotation operation is additionally introduced. When the third rotation operation is projected onto the second plane on which the first element 300 intersects the frame temple 200, the third rotation operation is a clockwise operation or a counter-clockwise operation, that is, when the user performs the third rotation operation, the user may not be blocked by the second plane. In this way, the user can continuously perform the third rotation operation to continuously scroll the content in the interface. This helps improve user experience in this solution.

In a possible implementation, the first element is a knob, the knob includes two states: being closely attached to the frame temple and being pulled out from the frame temple, and when the knob is in different states of the two states, the knob is configured to obtain different instructions. Optionally, when the knob is in the state of being closely attached to the frame temple, the rotation operation input via the knob is an operation on system content. For example, the first rotation operation is input via the knob to change the selected object in the control interface. For another example, the second rotation operation is input via the knob to scroll content in the browsing interface. For another example, another rotation operation is input via the knob to adjust volume. This is not exhaustive herein. When the knob is in a state of being pulled out from the frame temple, the rotation operation input via the knob is an operation on the glasses, for example, diopter adjustment for myopia on the glasses, astigmatism adjustment on the glasses, interpupillary distance adjustment on the glasses, or another operation on the glasses. This is not exhaustive herein.

In this implementation, when the first element is a knob, the knob may be configured to obtain different types of instructions when the knob is in two states "being closely attached to the frame temple" and "being pulled out from the frame temple", so that the user can input more types of operations via the glasses 10, and this facilitates input of more types of control instructions.

According to a second aspect, an embodiment of this application provides an instruction obtaining method, to apply a computer technology to the field of smart wearables. The method is applied to glasses, the glasses include a first element disposed on a frame temple and a processor, and the method includes: when a control interface is displayed to a user, obtaining, via the first element, a first rotation operation input by the user, where the control interface includes a plurality of objects for the user to select; and generating, via the processor, a first instruction corresponding to the first rotation operation, where the first instruction instructs to change a selected object in the control interface.

In the instruction obtaining method provided in the second aspect of this application, steps executed by the glasses in the possible implementations of the first aspect may be further executed by components in the glasses. For specific implementation steps of the second aspect and possible implementations of the second aspect of this embodiment of this application, and beneficial effects brought by each possible implementation, refer to descriptions in the possible implementations of the first aspect. Details are not described herein again.

According to a third aspect, an embodiment of this application provides an instruction obtaining apparatus, to apply a computer technology to the field of smart wearables. The instruction obtaining apparatus is used in glasses, and the glasses further include a first element disposed on a frame temple, and the instruction obtaining apparatus includes: an obtaining module, configured to: when a control interface is displayed to a user, obtain, via the first element, a first rotation operation input by the user, where the control interface includes a plurality of objects for the user to select; and a generation module, configured to generate a first instruction corresponding to the first rotation operation, where the first instruction instructs to change a selected object in the control interface.

In a possible implementation, the glasses further include a lens, the frame temple is connected to the lens via a second element, and a distance between the first element and the second element is greater than 0 millimeters and less than or equal to 40 millimeters.

In a possible implementation, the first element protrudes on a first side of the frame temple and does not protrude on a second side of the frame temple, the first side and the second side are respectively an upper side and a lower side of the frame temple, and a sensor is disposed on the second side of the frame temple. The obtaining module is further configured to obtain, via the sensor, a pressing operation input by the user.

In a possible implementation, the first element is a knob or a trackball.

In a possible implementation, the first element is a trackball, the control interface is displayed in a form of a sphere or a spheroid, and the plurality of objects are displayed on a surface of the sphere or the spheroid.

In a possible implementation, the first element is a trackball, and the first rotation operation includes a first rotation operation in a primary direction and a first rotation operation in a secondary direction; and the plurality of objects in the control interface include an object in a first direction and an object in a second direction, the first rotation operation in the primary direction is used to trigger scrolling of the object in the first direction, the first rotation operation in the secondary direction is used to trigger scrolling of the object in the second direction, and a quantity of objects in the first direction is greater than a quantity of objects in the second direction.

In a possible implementation, the first rotation operation in the primary direction corresponds to a first angle range for rotation of the trackball, the first rotation operation in the secondary direction corresponds to a second angle range for rotation of the trackball, and the first angle range is greater than the second angle range.

In a possible implementation, the first element is a trackball; and the obtaining module is further configured to: when a browsing interface is displayed to the user, obtain, via the first element, a second rotation operation input by the user, where the second rotation operation includes a second rotation operation in a primary direction and a second rotation operation in a secondary direction, the second rotation operation in the primary direction is used to trigger a first operation on the browsing interface, the second rotation operation in the secondary direction is used to trigger a second operation on the browsing interface, and the first operation is more frequently used than the second operation.

In a possible implementation, the obtaining module is further configured to: when a browsing interface is displayed to the user, obtain, via the first element, a third rotation operation input by the user, where when the third rotation operation is projected onto a second plane, the third rotation operation is a clockwise operation or a counter-clockwise operation, and the second plane is a surface on which the first element intersects the frame temple; and the generation module is further configured to generate a second instruction corresponding to the third rotation operation, where the second instruction instructs to scroll content in the browsing interface.

In a possible implementation, the first element is a knob, the knob includes two states: being closely attached to the frame temple and being pulled out from the frame temple, and when the knob is in different states of the two states, the knob is configured to obtain different instructions.

For specific implementation steps of the third aspect and the possible implementations of the third aspect of embodiments of this application and beneficial effects brought by each possible implementation, refer to descriptions in the possible implementations of the first aspect. Details are not described herein again.

According to a fourth aspect, an embodiment of this application provides a computer program product, where the computer program product includes a program, and when the program is run on a computer, the computer is enabled to perform the steps executed by the glasses in the first aspect.

According to a fifth aspect, an embodiment of this application provides a computer-readable storage medium, where the computer-readable storage medium stores a computer program, and when the program is run on a computer, the computer is enabled to perform the steps executed by the glasses in the first aspect.

According to a sixth aspect, an embodiment of this application provides a circuit system, where the circuit system includes a processing circuit, and the processing circuit is configured to perform the steps executed by the glasses in the first aspect.

According to a seventh aspect, an embodiment of this application provides a chip system, and the chip system includes a processor, configured to implement functions in the foregoing aspects, for example, sending or processing data and/or information in the foregoing method. In a possible design, the chip system further includes a memory. The memory is configured to store program instructions and data that are necessary for a server or a communication device. The chip system may include a chip, or may include a chip and another discrete component.

### BRIEF DESCRIPTION OF DRAWINGS

FIG. 1 is a diagram of a structure of glasses according to an embodiment of this application;
FIG. 2 is another diagram of glasses according to an embodiment of this application;
FIG. 3 is a diagram of a first element according to an embodiment of this application;
FIG. 4 is another diagram of a first element according to an embodiment of this application;
FIG. 5 is another diagram of a first element according to an embodiment of this application;
FIG. 6 is a diagram of a frame temple according to an embodiment of this application;
FIG. 7 is a diagram of a plurality of locations of a first element according to an embodiment of this application;
FIG. 8 is a diagram of two relative locations between a sensor and a first element according to an embodiment of this application;
FIG. 9 is a diagram of an arrangement area of a sensor according to an embodiment of this application;
FIG. 10 is a diagram of inputting a control operation by a user via a frame temple according to an embodiment of this application;
FIG. 11 is another diagram of an arrangement area of a sensor according to an embodiment of this application;
FIG. 12 is another diagram of inputting a control operation by a user via a frame temple according to an embodiment of this application;
FIG. 13 is a diagram of a rotation operation according to an embodiment of this application;
FIG. 14 is another diagram of a rotation operation according to an embodiment of this application;
FIG. 15 is another diagram of a rotation operation according to an embodiment of this application;
FIG. 16 is a diagram of a control interface according to an embodiment of this application;
FIG. 17 is another diagram of a control interface according to an embodiment of this application;
FIG. 18 is a diagram of two cases of angle ranges corresponding to four rotation operations according to an embodiment of this application;
FIG. 19 is a comparison diagram of a third rotation operation and a first rotation operation according to an embodiment of this application;
FIG. 20 is an application scenario diagram of a third rotation operation according to an embodiment of this application;
FIG. 21 is another application scenario diagram of a third rotation operation according to an embodiment of this application;
FIG. 22 is a diagram of scrolling content in a browsing interface at a parent-level and a child-level according to an embodiment of this application;
FIG. 23 is a diagram in which a selected object in a control interface is changed by using the control interface in a form of a spheroid according to an embodiment of this application;
FIG. 24 is a diagram of performing automatic re-centering on a control interface in a form of a spheroid according to an embodiment of this application;
FIG. 25 is a diagram in which an object in a form of an icon is perpendicular to a visual horizontal plane direction according to an embodiment of this application;
FIG. 26 is a diagram of two control interfaces according to an embodiment of this application;
FIG. 27 is a diagram of two states of a knob according to an embodiment of this application;
FIG. 28 is a schematic flowchart of an instruction obtaining method according to an embodiment of this application; and
FIG. 29 is a diagram of a structure of an instruction obtaining apparatus according to an embodiment of this application.

### DESCRIPTION OF EMBODIMENTS

In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, terms "include", "have", and any other variants thereof mean to cover the non-exclusive inclusion, so that a process, method, system, product, or device that includes a series of units is not necessarily limited to those units, but may include other units not expressly listed or inherent to such a process, method, product, or device.

The following describes embodiments of this application with reference to accompanying drawings. A person of ordinary skill in the art may learn that, with development of technologies and emergence of new scenarios, technical solutions provided in embodiments of this application are also applicable to a similar technical problem.

Embodiments of this application may be applied to various usage scenarios in which an interaction operation input by a user is obtained via glasses. For example, the glasses may be virtual reality (virtual reality, VR) glasses, augmented reality (augmented reality, AR) glasses, mixed reality (mixed reality, MR) glasses, or common glasses or another type of glasses having a communication function. This is not limited herein.

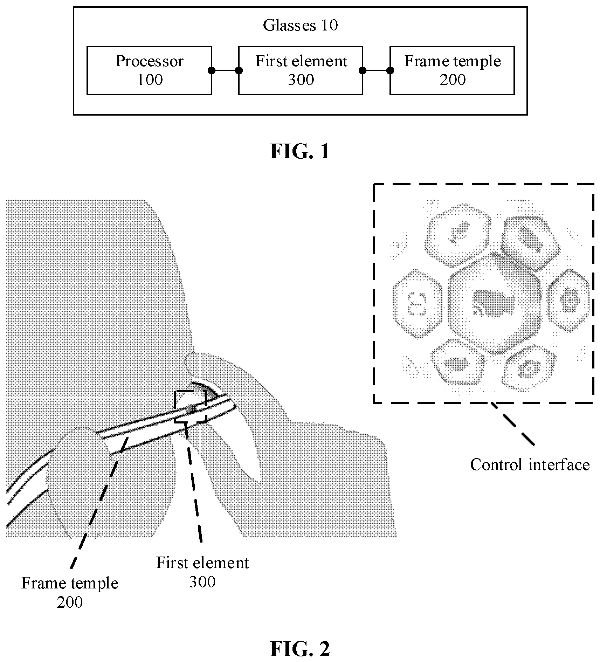

As smart glasses are increasingly popular, more functions can be implemented by the glasses. Accordingly, more interaction requirements are brought. To provide a more convenient interaction solution for a user, an embodiment of this application provides glasses. FIG. 1 is a diagram of a structure of glasses according to an embodiment of this application. Glasses 10 include a processor 100, two frame temples 200, and a first element 300 disposed on the frame temple 200. The first element 300 may be disposed on only one frame temple 200 of the glasses 10, or first elements 300 may be disposed on both frame temples of the glasses 10.

The first element 300 is configured to: when a control interface is displayed to a user, obtain a first rotation operation input by the user, where the control interface includes a plurality of objects for the user to select; and the processor 100 is configured to generate a first instruction corresponding to the first rotation operation, where the first instruction instructs to change a selected object in the control interface.

For example, in an implementation, if the glasses 10 may be VR glasses, AR glasses, or MR glasses, the control interface may be displayed in a virtual interface. In another implementation, the glasses 10 may establish a communication connection to another electronic device (for ease of description, referred to as "a target electronic device" subsequently). A display interface is configured in the target electronic device, and the control interface may be displayed on the target electronic device.

For more intuitive understanding of this solution, refer to FIG. 2. FIG. 2 is another diagram of glasses according to an embodiment of this application. When the user wears the glasses 10, the virtual control interface may be displayed to the user, and the plurality of objects for the user to select are displayed in the control interface. In FIG. 2, an example in which the plurality of objects are icons of a plurality of applications is used. The user may input a rotation operation via the first element 300 on the frame temple 200, to change the selected object in the control interface. It should be understood that, the example in FIG. 2 is merely for ease of understanding this solution, and is not intended to limit this solution.

Optionally, each first element 300 may be represented as a knob, a trackball, a combination of a knob and a trackball, or another element that can obtain the rotation operation input by the user. In this embodiment of this application, a plurality of specific representation forms of the first element 300 are provided, so that implementation flexibility of this solution is extended.

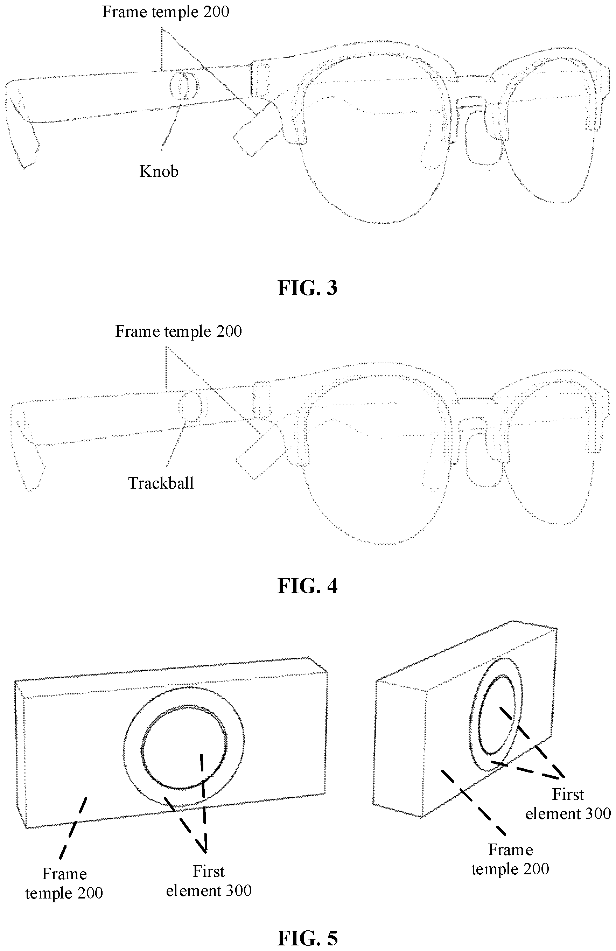

For more intuitive understanding of this solution, refer to FIG. 3 to FIG. 5. FIG. 3 to FIG. 5 are respectively three diagrams of a first element according to an embodiment of this application. In FIG. 3 and FIG. 4, an example in which one first element 300 is disposed on the frame temple 200 on a right side of the glasses 10 is used separately. In FIG. 3, the first element 300 is represented as a knob, and in FIG. 4, the first element 300 is represented as a trackball. In FIG. 5, the first element 300 is represented as a combination of a knob and a trackball. A left sub-diagram and a right sub-diagram in FIG. 5 respectively show, from different angles of view, the first element disposed on the frame temple 200. As shown in FIG. 5, the first element 300 includes a protruding sphere surface and a ring. In an implementation, the protruding sphere surface may be a sphere that can roll, and the ring may be a ring that can rotate physically and mechanically. In another implementation, the protruding sphere surface and the ring may be surfaces in a touch form. Optionally, when the user inputs the rotation operation on the first element 300 in FIG. 5, the first element 300 may return a vibration feedback to the user, to improve haptic experience. It should be understood that the examples in FIG. 3 to FIG. 5 are merely for ease of understanding this solution, and are not intended to limit this solution.

The first element 300 may be disposed at any location of the frame temple 200.

Optionally, the glasses 10 further include a lens, and each frame temple 200 is connected to the lens through a second element. In other words, the second element is a connection element between the frame temple 200 and the lens. For example, the second element may include a hinge, configured to implement a hinge connection between the frame temple and the lens. For another example, the second element may include a lens frame that wraps the lens, and the lens frame and the frame temple are integrally formed. For another example, the second element includes a hinge and a lens frame that wraps the lens, and the frame temple 200 is connected, through a hinge connection, to the lens frame that wraps the lens. This is not limited herein. A distance between the first element 300 and the second element may be greater than 0 millimeters and less than or equal to 40 millimeters. In other words, the frame temple 200 may include two ends, where one end close to the second element (that is, close to the lens) is referred to as a first end, and a distance between the first element 300 and the first end is greater than 0 millimeters and less than or equal to 40 millimeters.

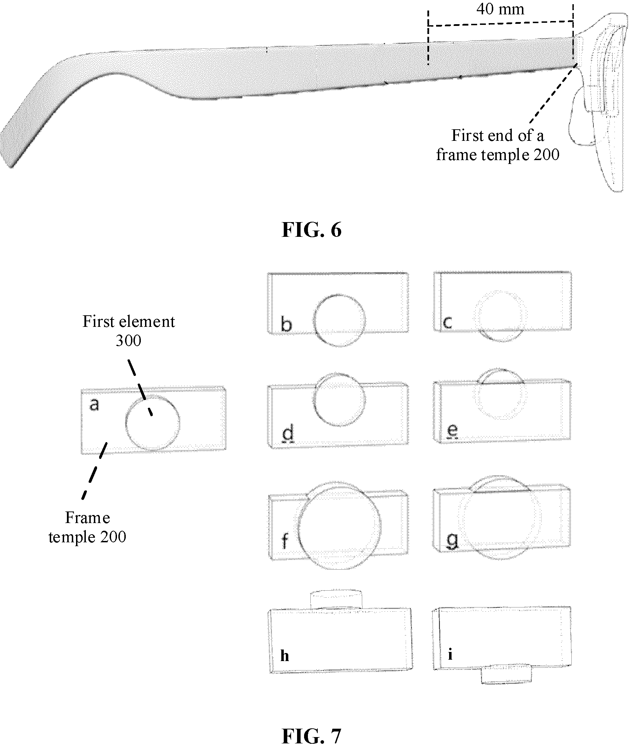

For more intuitive understanding of this solution, refer to FIG. 6. FIG. 6 is a diagram of a frame temple according to an embodiment of this application. A location range of 40 mm shown in FIG. 6 represents a location range of the first element 300 on the frame temple. It should be understood that the example in FIG. 6 is merely for ease of understanding this solution, and is not intended to limit this solution.

Further, optionally, a distance between the first element 300 and the second element may be greater than or equal to 20 millimeters and less than or equal to 30 millimeters.

In this embodiment of this application, the distance between the first element 300 and the second element is greater than 0 millimeters and less than or equal to 40 millimeters. To be specific, the first element 300 may be far away from the hair of the user, to avoid catching the hair of the user. In addition, the user cannot see an element on the frame temple, and in this case, that the first element 300 is disposed at one end of the lens helps the user locate the first element 300 via the second element, that is, helps the user find the first element 300. This brings more convenience to the user.

Each frame temple 200 may include an upper side, a lower side, an outer side, and an inner side. Optionally, the first element 300 protrudes on any one or more of the following sides of the frame temple 200: the upper side, the lower side, or the outer side.

For more intuitive understanding of this solution, refer to FIG. 7. FIG. 7 is a diagram of a plurality of locations of a first element according to an embodiment of this application. In FIG. 7, only an example in which the first element 300 is represented as a knob is used. When the first element 300 is represented in another form, the first element 300 may be placed with reference to the locations in FIG. 7. In a sub-diagram a in FIG. 7, the knob protrudes only on the outer side of the frame temple 200, and does not protrude on the upper side or the lower side of the frame temple 200. In a sub-diagram b in FIG. 7, the knob protrudes on the outer side and the lower side of the frame temple 200, and does not protrude on the upper side of the frame temple 200. In a sub-diagram c in FIG. 7, the knob protrudes only on the lower side of the frame temple 200, and does not protrude on the upper side or the outer side of the frame temple 200. In a sub-diagram d in FIG. 7, the knob protrudes on the outer side and the upper side of the frame temple 200, and does not protrude on the lower side of the frame temple 200. In a sub-diagram e in FIG. 7, the knob protrudes only on the upper side of the frame temple 200, and does not protrude on the lower side or the outer side of the frame temple 200. In a sub-diagram f in FIG. 7, the knob protrudes on the upper side, the lower side, and the outer side of the frame temple 200. In a sub-diagram g in FIG. 7, the knob protrudes on the upper side and the lower side of the frame temple 200, and does not protrude on the outer side of the frame temple 200. In a sub-diagram h in FIG. 7, the knob protrudes on the upper side of the frame temple 200, and does not protrude on the lower side or the outer side of the frame temple 200. In the sub-diagram i in FIG. 7, the knob protrudes on the lower side of the frame temple 200, and does not protrude on the upper side or the outer side of the frame temple 200. It should be noted that, when the first element 300 is represented as a trackball or in another form, a deployment location of the first element 300 may also be understood with reference to the locations shown in FIG. 7. The location of the first element 300 may be flexibly set with reference to an actual product form. The examples herein are merely for ease of understanding this solution, and are not intended to limit this solution.

Optionally, the user may further input a pressing operation via the glasses 10.

Specifically, in an implementation, the first element 300 protrudes on a first side of the frame temple 200, and does not protrude on a second side of the frame temple 200. The first side and the second side are respectively the upper side and the lower side of the frame temple 200. At least one sensor is disposed on the second side of the frame temple 200. The at least one sensor is configured to obtain the pressing operation input by the user. In this embodiment of this application, when the user inputs a rotation operation via the first element 300, the user generally places a thumb and an index finger on the upper side and the lower side of the frame temple 200 respectively. In this case, the first element 300 is disposed as protruding on the first side of the frame temple 200, and the sensor configured to obtain the pressing operation is disposed on the second side of the frame temple 200, so that the user can input more types of operations via the glasses 10. This facilitates input of more types of control instructions. In addition, the user does not need to adjust a gesture, so that fatigue caused by gesture adjustment of the user is avoided. In addition, because the user does not need to adjust the gesture, re-searching for an element location caused by gesture switching is avoid, so that user stickiness is improved in this solution.

If the first side is the upper side of the frame temple 200, the second side is the lower side of the frame temple 200. If the first side is the lower side of the frame temple 200, the second side is the upper side of the frame temple 200. For example, the sensor may be a pressure sensor, a touch sensor, or a sensor of another type.

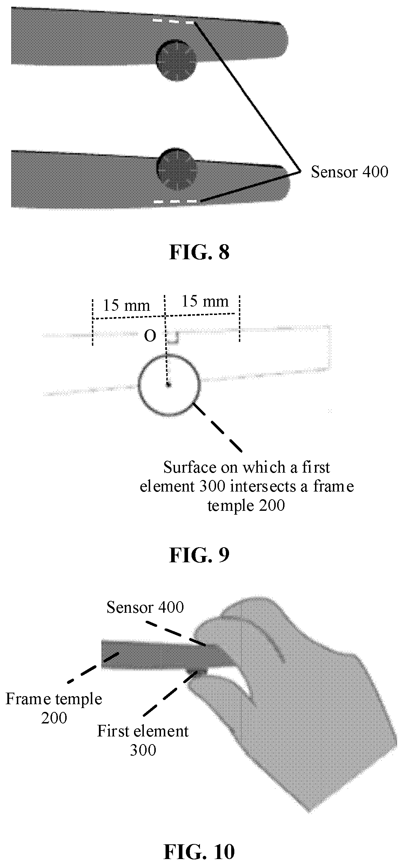

For more intuitive understanding of this solution, refer to FIG. 8. FIG. 8 is a diagram of two relative locations between a sensor and a first element according to an embodiment of this application. FIG. 8 includes two sub-diagrams: a left sub-diagram and a right sub-diagram. In FIG. 8, for example, a dashed line represents a configuration location of a sensor 400, and a knob is used as the first element 300. In the left sub-diagram in FIG. 8, the sensor 400 is disposed on the upper side of the frame temple 200, and the knob (an example of the first element 300) is disposed on the lower side of the frame temple 200. In the right sub-diagram in FIG. 8, the sensor 400 is disposed on the lower side of the frame temple 200, and the knob (an example of the first element 300) is disposed on the upper side of the frame temple 200. It should be understood that the examples in FIG. 8 are merely for ease of understanding this solution, and are not intended to limit this solution.

The at least one sensor may be disposed at any location on the first side of the frame temple 200. Optionally, a perpendicular line is made, to the second side of the frame temple 200, from a circle center of a surface on which the first element 300 intersects the frame temple 200, to obtain a target intersection point of the perpendicular line and the second side. The at least one sensor is disposed in a target area on the second side of the frame temple 200. The target intersection point is extended by 15 mm in a direction close to the first end of the frame temple 200, to determine one side of the target area; and the target intersection point is extended by 15 mm in a direction away from the first end of the frame temple, to determine another side of the target area.

For more intuitive understanding of this solution, refer to FIG. 9. FIG. 9 is a diagram of an arrangement area of a sensor according to an embodiment of this application. As shown in FIG. 9, the perpendicular line is made, to the second side of the frame temple 200, from the circle center of the surface on which the first element 300 intersects the frame temple 200, to obtain the target intersection point O of the perpendicular line and the second side. The intersection point O is extended by 15 mm in the direction close to the first end of the frame temple 200 to obtain a first point, and one side of the target area passes through the first point. The intersection point O is extended by 15 mm in the direction away from the first end of the frame temple 200 to obtain a second point, and another side of the target area passes through the second point. It should be understood that the example in FIG. 9 is merely for ease of understanding this solution, and is not intended to limit this solution.

Then, refer to FIG. 10. FIG. 10 is a diagram of inputting a control operation by a user via a frame temple according to an embodiment of this application. As shown in FIG. 10, the user may place the thumb and the index finger on the upper side and the lower side of the frame temple 200 respectively. The user may use the index finger to input the pressing operation via the sensor 400 on the upper side of the frame temple 200, and the user may use the thumb to input the rotation operation via the first element 300 on the lower side of the frame temple 200. It should be understood that the example in FIG. 10 is merely for ease of understanding this solution, and is not intended to limit this solution.

In another implementation, at least one sensor may be added to a surface of the first element 300. The at least one sensor is configured to obtain the pressing operation input by the user. For example, the sensor may be a pressure sensor, a touch sensor, or a sensor of another type. If the first element 300 is represented as a knob, at least one sensor may be added on a cylindrical surface of the knob. If the first element 300 is represented as a trackball, a sensor may be disposed on a surface of the trackball.

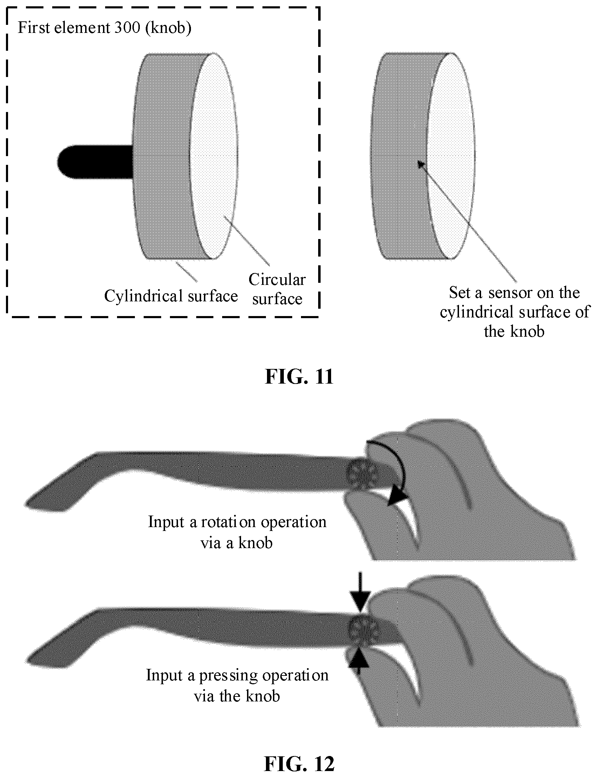

For more intuitive understanding of this solution, refer to FIG. 11. FIG. 11 is another diagram of an arrangement area of a sensor according to an embodiment of this application. As shown in a left sub-diagram in FIG. 11, the knob (that is, an example of the first element 300) may include a cylindrical surface and a circular surface. As shown in a right sub-diagram in FIG. 11, the sensor may be disposed on the cylindrical surface of the knob, to obtain the pressing operation input by the user. It should be understood that the example in FIG. 11 is merely for ease of understanding this solution, and is not intended to limit this solution.

Then, refer to FIG. 12. FIG. 12 is another diagram of inputting a control operation by a user via a frame temple according to an embodiment of this application. An upper sub-diagram in FIG. 12 shows how the user inputs a rotation operation via the knob. A lower sub-diagram in FIG. 12 shows how the user inputs a pressing operation via the knob. It should be understood that the examples in FIG. 12 are merely for ease of understanding this solution, and are not intended to limit this solution.

Optionally, if the first element 300 is represented as a trackball, the rotation operation input by the user via the trackball may be classified into a rotation operation in a primary direction and a rotation operation in a secondary direction.

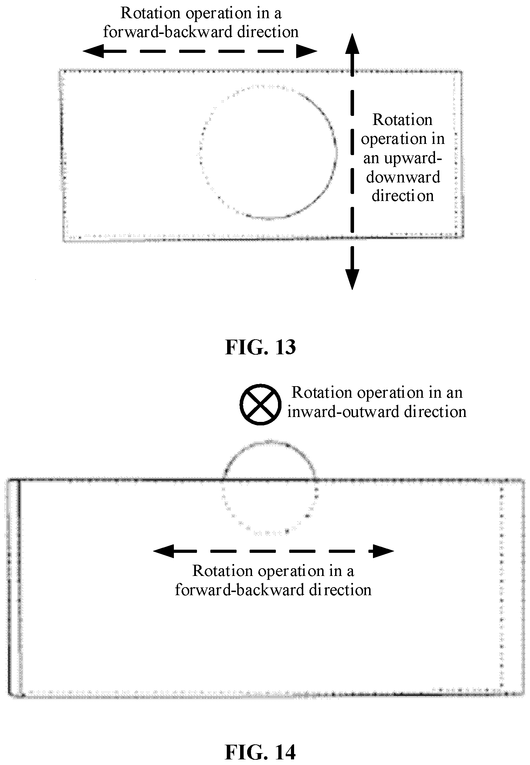

For example, refer to FIG. 13. FIG. 13 is a diagram of a rotation operation according to an embodiment of this application. If the trackball (that is, an example of the first element 300) protrudes from the outer side of the frame temple 200, the rotation operation input by the user via the trackball may include a rotation operation in a forward-backward direction and a rotation operation in an upward-downward direction. The rotation operation in the forward-backward direction may be set as the rotation operation in the primary direction. The rotation operation in the upward-downward direction may be set as the rotation operation in the secondary direction. It should be understood that, the example in FIG. 13 is merely for ease of understanding this solution, and is not intended to limit this solution.

For another example, refer to FIG. 14. FIG. 14 is another diagram of a rotation operation according to an embodiment of this application. If the trackball (that is, an example of the first element 300) protrudes from the upper side of the frame temple, the rotation operation input by the user via the trackball may include a rotation operation in a forward-backward direction and a rotation operation in an inward-outward direction. The rotation operation in the forward-backward direction may be set as the rotation operation in the primary direction. The rotation operation in the inward-outward direction may be set as the rotation operation in the secondary direction. It should be understood that, the example in FIG. 14 is merely for ease of understanding this solution, and is not intended to limit this solution.

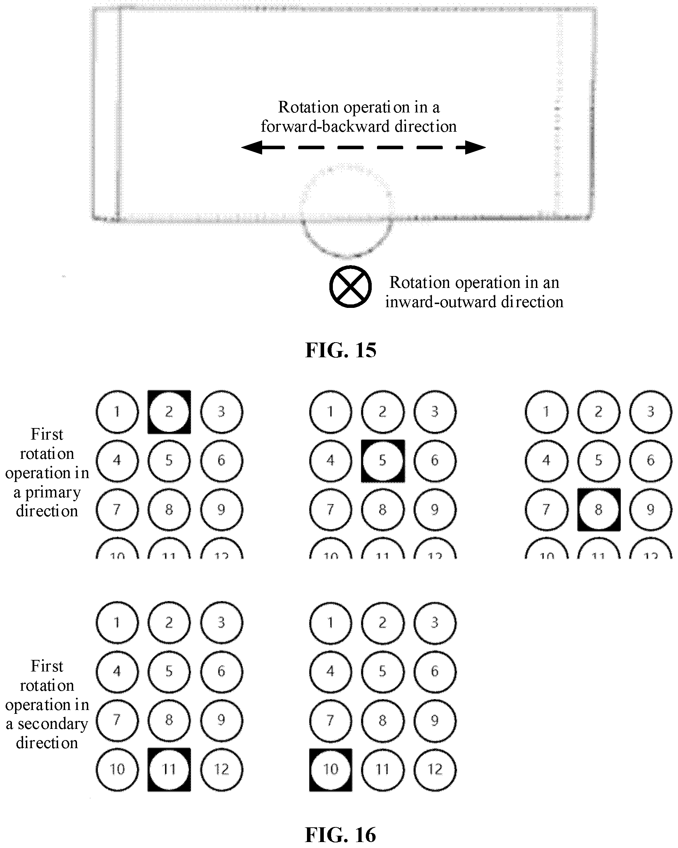

For another example, refer to FIG. 15. FIG. 15 is another diagram of a rotation operation according to an embodiment of this application. If the trackball (that is, an example of the first element 300) protrudes from the lower side of the frame temple, the rotation operation input by the user via the trackball may include a rotation operation in a forward-backward direction and a rotation operation in an inward-outward direction. The rotation operation in the forward-backward direction may be set as the rotation operation in the primary direction. The rotation operation in the inward-outward direction may be set as the rotation operation in the secondary direction. It should be understood that, the example in FIG. 15 is merely for ease of understanding this solution, and is not intended to limit this solution.

Optionally, the rotation operation in the primary direction and the rotation operation in the secondary direction may be set or adjusted by the user. For example, if the trackball (that is, an example of the first element 300) protrudes from the lower side of the frame temple, the rotation operation in the forward-backward direction is set to the rotation operation in the primary direction, and the rotation operation in the inward-outward direction is set to the rotation operation in the secondary direction, the user may adjust the rotation operation in the primary direction from the rotation operation in the forward-backward direction to the rotation operation in the inward-outward direction, and adjust the rotation operation in the secondary direction from the rotation operation in the inward-outward direction to the rotation operation in the forward-backward direction. It should be understood that the example herein is merely for ease of understanding this solution, and is not intended to limit this solution.

In an application scenario, when the control interface is displayed to the user, a purpose of inputting, by the user, a first rotation operation via the trackball (that is, an example of the first element 300) is to change the selected object in the control interface. The first rotation operation may include a first rotation operation in the primary direction and a first rotation operation in the secondary direction. The plurality of objects in the control interface include an object in a first direction and an object in a second direction, the first rotation operation in the primary direction is used to trigger scrolling of the object in the first direction, the first rotation operation in the secondary direction is used to trigger scrolling of the object in the second direction, and a quantity of objects in the first direction is greater than a quantity of objects in the second direction.

Optionally, the quantity of objects in the second direction in the control interface is preset. When an object needs to be added in the control interface, the object may be added in the first direction.

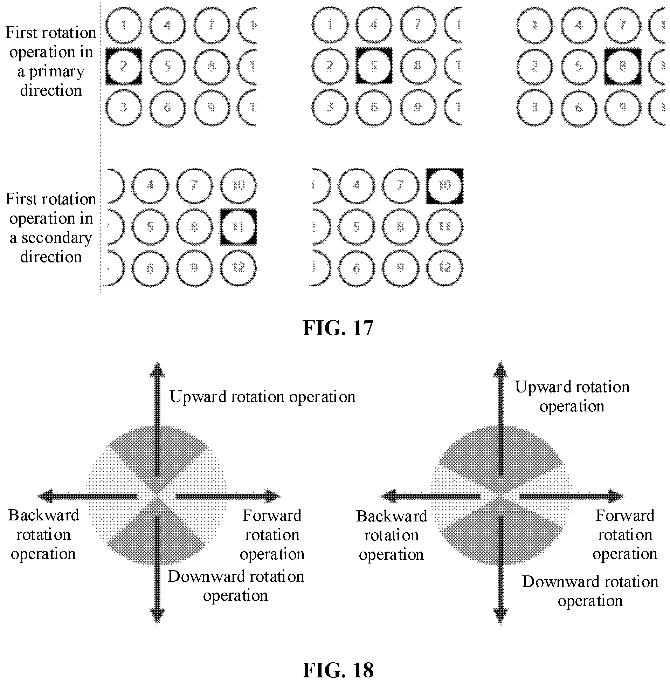

For more intuitive understanding of this solution, refer to FIG. 16 and FIG. 17. FIG. 16 and FIG. 17 are two diagrams of a control interface according to an embodiment of this application. In FIG. 16 and FIG. 17, an example in which the control interface displays the plurality of objects in a manner of an icon list, and one icon represents one object is used separately. A difference lies in that, in FIG. 16, an example in which the first direction is a vertical direction of the icon list and the second direction is a horizontal direction of the icon list is used, and in FIG. 17, an example in which the first direction is a horizontal direction of the icon list and the second direction is a vertical direction of the icon list is used.

First, as shown in FIG. 16, if an icon 2 is a currently selected object, when the user inputs the first rotation operation in the primary direction via the trackball, changing the selected object in the first direction (namely, the vertical direction of the icon list) is triggered, that is, the selected object is sequentially changed from 2 to 5, 8, and 11; and the user inputs the first rotation operation in the secondary direction via the trackball, and changing the selected object in the second direction (namely, the horizontal direction of the icon list) is triggered, that is, the selected object is changed from 11 to 10. When an object needs to be added in the control interface, a new icon may be added in the vertical direction of the icon list. It should be understood that the example in FIG. 16 is merely for ease of understanding this solution, and is not intended to limit this solution.

Then, as shown in FIG. 17, if an icon 2 is a currently selected object, when the user inputs the first rotation operation in the primary direction via the trackball, changing the selected object in the first direction (namely, the horizontal direction of the icon list) is triggered, that is, the selected object is sequentially changed from 2 to 5, 8, and 11; and the user inputs the first rotation operation in the secondary direction via the trackball, and changing the selected object in the second direction (namely, the vertical direction of the icon list) is triggered, that is, the selected object is changed from 11 to 10. When an object needs to be added in the control interface, a new icon may be added in the horizontal direction of the icon list. It should be understood that the example in FIG. 17 is merely for ease of understanding this solution, and is not intended to limit this solution.

In this embodiment of this application, although the trackball has a universal operation capability, that is, the trackball may roll in any direction, on the glasses, because of differences of gestures and finger flexibility of the user, different directions control capabilities for the trackball are different. Therefore, the rotation operation input via the trackball is classified into the rotation operation in the primary direction and the rotation operation in the secondary direction, the first rotation operation in the primary direction is used to trigger scrolling of the object in the first direction, the first rotation operation in the secondary direction is used to trigger scrolling of the object in the second direction, and the quantity of objects in the first direction is greater than the quantity of objects in the second direction. This helps the user select an object more conveniently.

In another application scenario, when a browsing interface is displayed to the user, a second rotation operation input by the user is obtained via the trackball (that is, an example of the first element 300). The second rotation operation includes a second rotation operation in the primary direction and a second rotation operation in the secondary direction. The second rotation operation in the primary direction is used to trigger a first operation on the browsing interface, the second rotation operation in the secondary direction is used to trigger a second operation on the browsing interface, and the first operation is more frequently used than the second operation. It should be noted that both "the first rotation operation" and "the second rotation operation" are rotation operations input via the trackball, and a difference lies in that "the first rotation operation" and "the second rotation operation" correspond to different application scenarios.

For example, when the browsing interface is displayed to the user, the first operation may include triggering scrolling of browsing content, that is, when the user inputs the second rotation operation in the primary direction via the trackball, scrolling of the browsing content is triggered; and the second operation may include operations such as exiting the browsing interface, returning to a message list, and returning to a previous level. Specific content of "the first operation" and "the second operation" may be flexibly set with reference to an actual application scenario, and is not limited herein.

In this embodiment of this application, because the user has different control capabilities on the trackball in different directions, when the browsing interface is displayed to the user, the second rotation operation input by the user via the trackball may also be classified into the second rotation operation in the primary direction and the second rotation operation in the secondary direction. The operation, on the browsing interface, triggered by the second rotation operation in the primary direction is more frequently used. This helps the user browse the interface more conveniently, to improve user stickiness in this solution.

Optionally, because the trackball has the universal operation capability, and an identified rotation operation (which may be the first rotation operation or may be the second rotation operation) may include two rotation operations in the primary direction and two rotation operations in the secondary direction, the processor 100 needs to identify the rotation operation input by the user, to determine that the rotation operation input by the user is a specific rotation operation of the four rotation operations. The processor 100 may store a first mapping relationship. The first mapping relationship indicates a correspondence between a rotation operation input by a user and four identified rotation operations. For example, the first mapping relationship may include four angle ranges corresponding to the four identified rotation operations. After detecting the rotation operation input by the user via the trackball, the processor 100 may obtain a rotation angle of the rotation operation.

In an implementation, the angle ranges corresponding to the four rotation operations are consistent. In another implementation, compared with angle ranges corresponding to the two rotation operations in the secondary direction, angle ranges corresponding to the two rotation operations in the primary direction are wider. To be specific, each rotation operation in the primary direction may correspond to a first angle range for rotation of the trackball, that is, when the processor 100 identifies that a rotation angle of the trackball is in the first angle range, the rotation operation is identified as the rotation operation in the primary direction; and the rotation operation in the secondary direction corresponds to a second angle range for rotation of the trackball, that is, when the processor 100 identifies that the rotation angle of the trackball is in the second angle range, the rotation operation is identified as the rotation operation in the secondary direction. The first angle range is greater than the second angle range, and "the rotation angle for rotation of the trackball" may also be understood as "the rotation angle of the rotation operation". For example, the rotation operation in the primary direction may be the first rotation operation in the primary direction or the second rotation operation in the primary direction, and the rotation operation in the secondary direction may be the first rotation operation in the secondary direction or the second rotation operation in the secondary direction.

For more intuitive understanding of this solution, refer to FIG. 18. FIG. 18 is a diagram of two cases of angle ranges corresponding to four rotation operations according to an embodiment of this application. In FIG. 18, an example in which the four rotation operations include rotation operations in the upward-downward direction and rotation operations in the forward-backward direction is used. FIG. 18 includes two sub-diagrams: a left sub-diagram and a right sub-diagram. In the left sub-diagram in FIG. 18, the angle ranges corresponding to the four rotation operations are consistent. In the right sub-diagram in FIG. 18, the first angle range corresponding to the two rotation operations (that is, an upward rotation operation and a downward rotation operation shown in FIG. 18) in the primary direction is greater than the second angle range corresponding to the two rotation operations (that is, a forward rotation operation and a backward rotation operation shown in FIG. 18) in the secondary direction. It should be noted that, in an actual case, the rotation operation input via the trackball may be three-dimensional, and in the example in FIG. 18, a concept "the angle ranges corresponding to the four rotation operations" is explained only by using a form of a two-dimensional plane. In other words, the example in FIG. 18 is merely for ease of understanding this solution, and is not intended to limit this solution.

In this embodiment of this application, the angle range corresponding to the rotation operation in the primary direction is larger, so that difficulty in inputting the rotation operation in the primary direction by the user can be reduced. Use duration of the rotation operation in the primary direction is longer. Therefore, this is equivalent to reducing difficulty in inputting the rotation operation by the user.

Optionally, the user may further input the third rotation operation via the first element 300. The first element 300 is further configured to: when the browsing interface is displayed to the user, obtain, via the first element 300, the third rotation operation input by the user, where when the third rotation operation is projected onto a second plane, the third rotation operation is a clockwise operation or a counter-clockwise operation, and the second plane is a surface on which the first element intersects the frame temple, that is, when the second plane is used as a reference, the third rotation operation is a clockwise operation or a counter-clockwise operation. The processor 100 is further configured to generate a second instruction corresponding to the third rotation operation, where the second instruction instructs to scroll content in the browsing interface.

Optionally, if the first element 300 is a trackball, a layer of touch sensor may be further disposed around the first element 300. The touch sensor is configured to assist in determining whether a first rotation operation or a third rotation operation is input by the user via the trackball, that is, is configured to assist in determining whether a counter-clockwise operation or a clockwise operation, a rotation operation in the upward-downward direction, a rotation operation in the forward-backward direction, or a rotation operation in the inward-outward direction is input by the user.

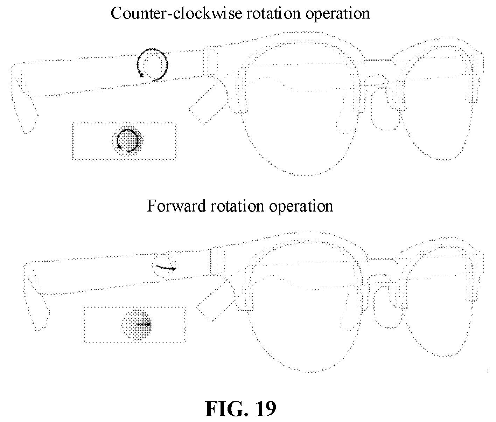

For more intuitive understanding of this solution, refer to FIG. 19. FIG. 19 is a comparison diagram of a third rotation operation and a first rotation operation according to an embodiment of this application. FIG. 19 includes two sub-diagrams: an upper sub-diagram and a lower sub-diagram. In the upper sub-diagram in FIG. 19, the user inputs a counter-clockwise operation, and in the lower sub-diagram in FIG. 19, the user inputs a forward rotation operation. It should be understood that the examples in FIG. 19 are merely for ease of understanding this solution, and are not intended to limit this solution.

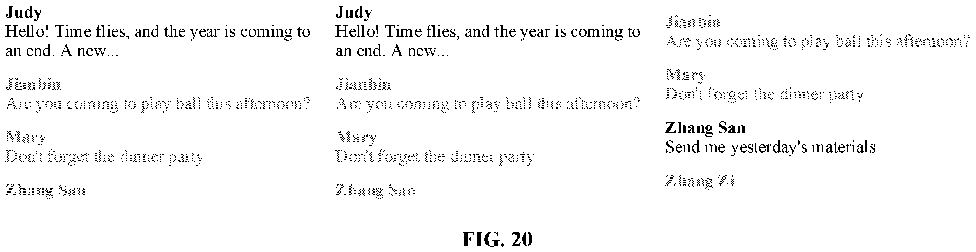

Then, refer to FIG. 20. FIG. 20 is an application scenario diagram of a third rotation operation according to an embodiment of this application. In FIG. 20, displaying the browsing interface to the user is used as an example. A purpose of inputting, by the user, the third rotation operation (clockwise or counter-clockwise) via the trackball (that is, an example of the first element 300) is to scroll content in the browsing interface. In an information list shown in FIG. 20, an initial display location is Judy. In FIG. 20, a continuous clockwise operation is input, so that the display location is sequentially changed to Mary and Zhang San. It should be understood that the example in FIG. 20 is merely for ease of understanding this solution, and is not intended to limit this solution.

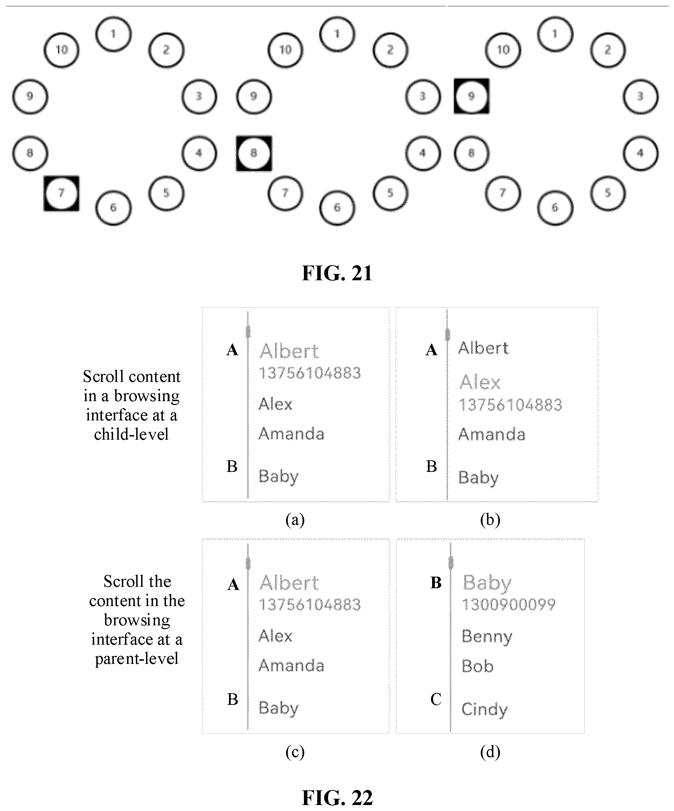

Optionally, in another application scenario, refer to FIG. 21. FIG. 21 is another application scenario diagram of a third rotation operation according to an embodiment of this application. A plurality of icons in FIG. 21 represent a plurality of objects in the control interface. When the control interface is displayed to the user, the user inputs the third rotation operation (clockwise or counter-clockwise) via the trackball (that is, an example of the first element 300) to change a selected object in the control interface, that is, in FIG. 21, a continuous clockwise operation is input, so that the selected object is sequentially changed from 7 to 8 and 9. It should be understood that the example in FIG. 21 is merely for ease of understanding this solution, and is not intended to limit this solution.

In this embodiment of this application, when the user inputs an upward, downward, leftward, or rightward rotation operation via the trackball, when the trackball is rotated upward, downward, leftward, or rightward from a center point to a specific angle, a finger touches the plane on which the first element 300 intersects the frame temple 200, and consequently the finger is blocked. In this case, the user needs to lift the finger to return to the center point and roll the trackball again. As a result, when the user uses the browsing interface, the user frequently moves a location of the finger. In this solution, when the browsing interface is displayed to the user, the third rotation operation is additionally introduced. When the third rotation operation is projected onto the second plane on which the first element 300 intersects the frame temple 200, the third rotation operation is a clockwise operation or a counter-clockwise operation, that is, when the user performs the third rotation operation, the user may not be blocked by the second plane. In this way, the user can continuously perform the third rotation operation to continuously scroll the content in the interface. This helps improve user experience in this solution.

In this embodiment of this application, the user may perform the rotation operation on the first element 300 at different rotation speeds, and correspondingly, the processor 100 in the glasses 10 may detect the rotation operations at different rotation speeds. Optionally, the processor 100 may preset at least one first speed threshold corresponding to a rotation speed of the rotation operation, there are at least two speed ranges corresponding to the at least one first speed threshold, and rotation operations in different speed ranges may be used to trigger different control instructions.

For example, the processor 100 may preset a first speed threshold, so that two speed ranges can be obtained. When the browsing interface is displayed to the user, if the processor 100 determines that a speed of the rotation operation input by the user is greater than or equal to the first speed threshold, scrolling of the content in the browsing interface at a parent-level may be triggered; or if the processor 100 determines that the speed of the rotation operation input by the user is less than the first speed threshold, scrolling of the content in the browsing interface at a child-level may be triggered, where the parent-level and the child-level may be different category levels.

For more intuitive understanding of this solution, refer to FIG. 22. FIG. 22 is a diagram of scrolling content in a browsing interface at a parent-level and a child-level according to an embodiment of this application. FIG. 22 includes four sub-diagrams: (a), (b), (c), and (d). In each sub-diagram in FIG. 22, content on the left represents content at the parent-level, and content on the right represents content at the child-level. The sub-diagram (a) and the sub-diagram (b) in FIG. 22 show scrolling of the content in the browsing interface at the child-level. In the sub-diagram (a) in FIG. 22, Albert at a child-level under a parent-level A is selected. In the sub-diagram (b) in FIG. 22, Alex at a child-level under a parent-level A is selected.

The sub-diagram (c) and the sub-diagram (d) in FIG. 22 show scrolling of the content in the browsing interface at the child-level. In the sub-diagram (c) in FIG. 22, Albert at a child-level under a parent-level A is selected. In the sub-diagram (d) in FIG. 22, Baby at a child-level under a parent-level B is selected. It should be understood that the examples in FIG. 22 are merely for ease of understanding this solution, and are not intended to limit this solution.

Optionally, when rotation operations input by the user are in different speed ranges, that is, when speeds of the rotation operations detected by the processor 100 are in different speed ranges, different feedback results may be output to the user. Optionally, when rotation operations input by the user are in different speed ranges, different feedback results may be presented from perspectives such as a visual sense, an auditory sense, and/or a haptic sense.

For example, the first speed threshold may be configured in the processor 100. If the processor 100 determines that the speed of the rotation operation input by the user is greater than or equal to the first speed threshold, a feedback result in a first touch sense form may be output to the user. If the processor 100 determines that the speed of the rotation operation input by the user is less than the first speed threshold, a feedback result in a second touch sense form may be output to the user. A vibration of a first touch sense is stronger and last longer in comparison with a second touch sense, that is, a vibration amplitude of the first touch sense is a larger and has a longer period in comparison with the second touch sense. In addition, a visual element like a color, a contrast, or flickering effect may be used to prompt a content subject currently scrolled, and the like. The example herein is merely for ease of understanding this solution. A specific type of a feedback result to be output may be flexibly set with reference to an actual application scenario.

Optionally, if the first element 300 is represented as the trackball, the control interface may be displayed in a form of a sphere or a spheroid, and a plurality of objects are displayed on a surface of the sphere or the spheroid. In this embodiment of this application, because the trackball has a three-dimensional structure of a sphere, if the control interface is displayed in the form of a sphere or a spheroid, the control interface seen by the user and the trackball touched by the user are unified, and this helps reduce difficulty in a process of selecting an object by the user.

Optionally, the selected object is located at a visual center location in the control interface in the form of a sphere or a spheroid. For example, when obtaining the rotation operation input by the user via the trackball (that is, an example of the first element 300), the processor 100 may obtain a rotation direction of the rotation operation, and generate a first rotation instruction corresponding to the rotation direction, where the first rotation instruction instructs the glasses 10 to rotate the control interface in the form of a sphere or spheroid, or the processor 100 sends the first rotation instruction to the target electronic device, where the first rotation instruction instructs the target electronic device to rotate the control interface in the form of a sphere or spheroid. That is, the trackball is rotated in a specific direction, and the sphere or the spheroid may also rotate in the direction. Correspondingly, an object located at the visual center location also changes, so that the selected object in the control interface is changed.

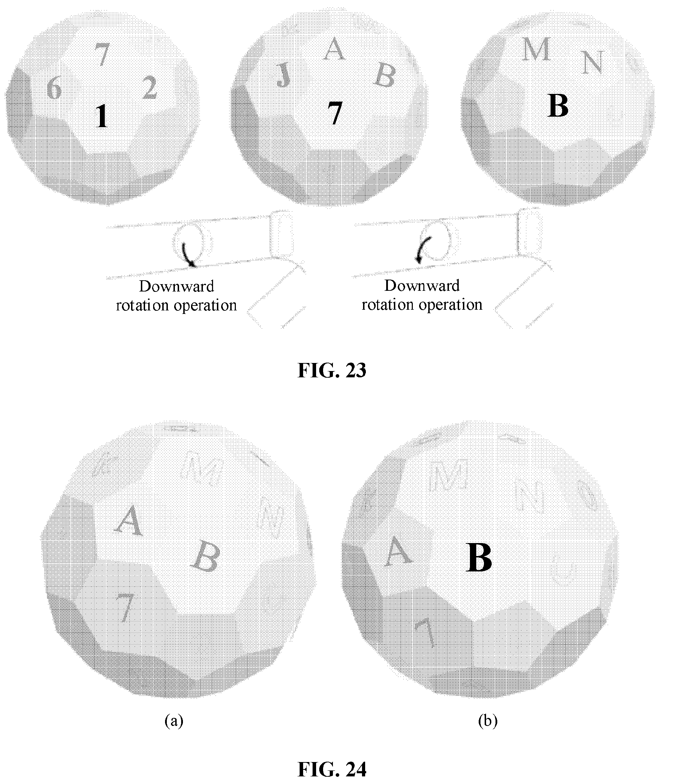

For more intuitive understanding of this solution, refer to FIG. 23. FIG. 23 is a diagram in which a selected object in a control interface is changed by using the control interface in a form of a spheroid according to an embodiment of this application. As shown in FIG. 23, an initially selected object in the control interface in the form of a spheroid is 1, and the processor 100 detects that the user inputs a downward rotation operation via the trackball. Correspondingly, the control interface in the form of a spheroid is also rotated downward, and the selected object in the control interface changes from 1 to 7. The processor 100 further detects that the user inputs a rightward-downward rotation operation via the trackball. Correspondingly, the control interface in the form of a spheroid is also rotated rightward and downward, and the selected object in the control interface changes from 7 to B. It should be understood that the example in FIG. 23 is merely for ease of understanding this solution, and is not intended to limit this solution.

Optionally, because the control interface in the form of a sphere or spheroid is rotated with rotation of the trackball, in some scenarios, when a finger of the user leaves, that is, when the processor 100 does not detect that the user continues to input a rotation operation, the control interface in the form of a sphere or spheroid may be rotated to a junction between a plurality of objects, and generation of a second rotation instruction be triggered, where the second rotation instruction instructs the glasses 10 or the target electronic device (that is, an electronic device in a communication connection with the glasses 10) to perform automatic re-centering on the control interface in the form of a sphere or spheroid.

For example, the processor 100 may obtain distances between the visual center point in the control interface and the plurality of objects, and determine, as the target object, an object that is in the plurality of objects and that is closest to the visual center point in the control interface, where the second rotation instruction instructs to move the target object to the visual center location in the control interface. Optionally, if the distances between the visual center point in the control interface and the plurality of objects are consistent, any one of the plurality of objects may be moved to the visual center location in the control interface, or the target object may be determined from the plurality of objects based on a rotation direction of a rotation operation performed before the finger of the user leaves, or the processor 100 may also determine, in another manner, a specific target object to be placed at the visual center location in the control interface after "automatic re-centering" is performed. The examples herein are merely used to prove feasibility of this solution, and are not intended to limit this solution.

For more intuitive understanding of this solution, refer to FIG. 24. FIG. 24 is a diagram of performing automatic re-centering on a control interface in a form of a spheroid according to an embodiment of this application. FIG. 24 includes two sub-diagrams: (a) and (b). As shown in the sub-diagram (a) in FIG. 24, when the processor 100 does not detect that the user continues to input a rotation operation, the control interface in the form of a sphere or spheroid is rotated to a location between A, B, and 7. In this case, entering the sub-diagram (b) in FIG. 24 may be triggered, that is, automatic re-centering performed on the control interface in the form of a sphere or spheroid is triggered. Because B is closer to the visual center location in the control interface, B is moved to the visual center location in the control interface. It should be understood that the example in FIG. 24 is merely for ease of understanding this solution, and is not intended to limit this solution.

Optionally, an object is displayed in a form of an icon in the control interface in the form of a sphere or a spheroid. When rotation of the control interface in the form of a sphere or a spheroid stops, the object in the form of an icon may be visually tilted or inverted, and in this case, generation of a third rotation instruction may be triggered, where the third rotation instruction is used to control rotation of the control interface in the form of a sphere or a spheroid, so that the object in the form of an icon is perpendicular to a visual horizontal plane, that is, the object in the form of an icon is displayed in a vertical direction. It should be noted that the foregoing steps may be performed in the glasses 10, or may be performed in the target electronic device in a communication connection with the glasses 10. Specifically, this may be flexibly set with reference to an actual application scenario, and is not limited herein.

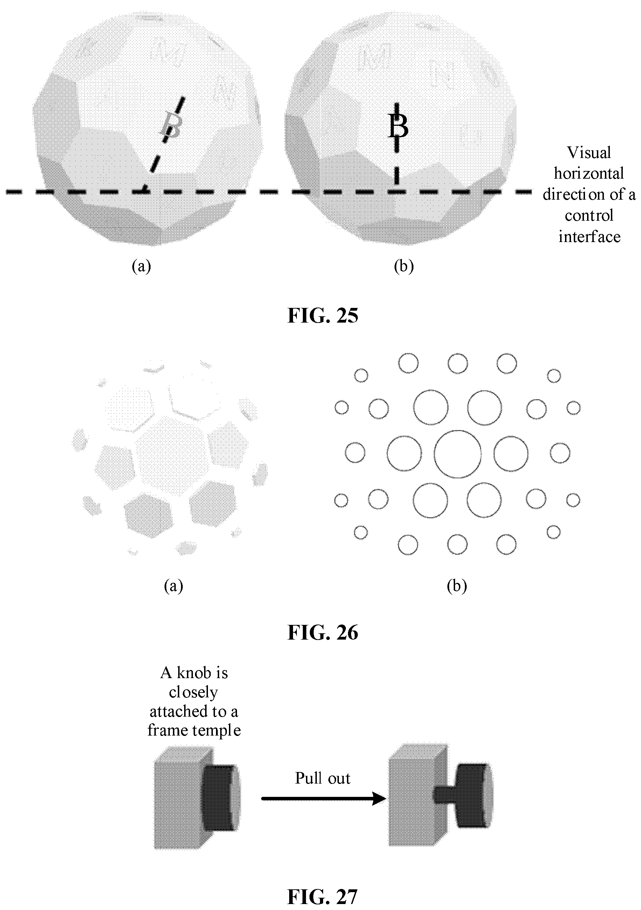

For more intuitive understanding of this solution, refer to FIG. 25. FIG. 25 is a diagram in which an object in a form of an icon is perpendicular to a visual horizontal plane direction according to an embodiment of this application. FIG. 25 includes two sub-diagrams: (a) and (b). As shown in the sub-diagram (a) in FIG. 25, the object in the form of an icon is not perpendicular to the visual horizontal plane direction of the control interface, and after the control interface of a sphere or a spheroid is rotated, the sub-diagram (b) in FIG. 25 is entered. In the sub-diagram (b) in FIG. 25, the object in the form of an icon is not perpendicular to the visual horizontal plane direction of the control interface. It should be understood that, the example in FIG. 25 is merely for ease of understanding this solution, and is not intended to limit this solution.

Optionally, icons of different objects in the control interface in the form of a sphere or spheroid may be different, that is, an icon corresponding to the selected object may be highlighted. For example, the icon corresponding to the selected object may be highlighted in a color, a size, a shape, a contrast, or another angle. It should be noted that the foregoing steps may be performed in the glasses 10, or may be performed in the target electronic device in a communication connection with the glasses 10. Specifically, this may be flexibly set with reference to an actual application scenario, and is not limited herein.

For example, an icon at the visual center location in the control interface is the icon corresponding to the selected object, the icon may be large, and another icon that is far away from the visual center location in the control interface may be small.

For more intuitive understanding of this solution, refer to FIG. 26. FIG. 26 is a diagram of two control interfaces according to an embodiment of this application. FIG. 26 includes two sub-diagrams: (a) and (b). The sub-diagram (a) in FIG. 26 shows a display manner of the control interface. The sub-diagram (b) in FIG. 26 shows another display manner of the control interface. The sub-diagram (a) in FIG. 26 displays the control interface in the form of a spheroid, and the sub-diagram (b) in FIG. 26 displays the control interface in the form of a sphere. In the sub-diagram (a) and the sub-diagram (b) in FIG. 26, an icon at the visual center location in the control interface is large, and an icon that is farther away from the visual center location in the control interface is smaller. It should be understood that the examples in FIG. 26 are merely for ease of understanding this solution, and are not intended to limit this solution.

Optionally, if the first element 300 is represented as a knob, the knob includes two states: being closely attached to the frame temple and being pulled out from the frame temple, and when the knob is in different states of the two states, the knob is configured to obtain different instructions. Optionally, when the knob is in the state of being closely attached to the frame temple, the rotation operation input via the knob is an operation on system content. For example, the first rotation operation is input via the knob to change the selected object in the control interface. For another example, the second rotation operation is input via the knob to scroll content in the browsing interface. For another example, another rotation operation is input via the knob to adjust volume. This is not exhaustive herein. When the knob is in a state of being pulled out from the frame temple, the rotation operation input via the knob is an operation on the glasses 10, for example, diopter adjustment for myopia on the glasses 10, astigmatism adjustment on the glasses 10, interpupillary distance adjustment on the glasses 10, or another operation on the glasses 10. This is not exhaustive herein.

For more intuitive understanding of this solution, refer to FIG. 27. FIG. 27 is a diagram of two states of a knob according to an embodiment of this application. In a left sub-diagram in FIG. 27, the knob is in the state of being closely attached to the frame temple. In a right sub-diagram in FIG. 27, the knob is in the state of being pulled out from the frame temple. It should be understood that the examples in FIG. 27 are merely for ease of understanding, and are not intended to limit this solution.

In this embodiment of this application, when the first element 300 is a knob, the knob may be configured to obtain different types of instructions when the knob is in two states "being closely attached to the frame temple" and "being pulled out from the frame temple", so that the user can input more types of operations via the glasses 10, and this facilitates input of more types of control instructions.

In this embodiment of this application, if the user may further input a pressing operation via the glasses 10, and correspondingly, the processor 100 may obtain the pressing operation input by the user, the processor 100 in the glasses 10 may obtain a pressure value of the pressing operation. Optionally, at least one first pressure threshold corresponding to the pressing operation may be preset in the processor 100. There are at least two pressure value ranges corresponding to the at least one first pressure threshold. Pressing operations with different pressure value ranges may be used to trigger different control instructions.

For example, the processor 100 may preset a first pressure threshold, so that two pressure value ranges can be obtained. When the browsing interface is displayed to the user, if the processor 100 determines that a pressure value of the pressing operation input by the user is greater than or equal to the first pressure value threshold, scrolling of the content in the browsing interface at a parent-level may be triggered; or if the processor 100 determines that the pressure value of the pressing operation input by the user is less than the first pressure value threshold, scrolling of the content in the browsing interface at a child-level may be triggered, where the parent-level and the child-level may be different category levels.

Optionally, when pressing operations input by the user are in different pressure ranges, that is, when the pressing operations detected by the processor 100 are in different pressure value ranges, different feedback results may be output to the user. Optionally, when pressing operations input by the user are in different pressure ranges, different feedback results may be presented from perspectives such as a visual sense, an auditory sense, and/or a haptic sense. For examples of "different feedback effects", refer to the foregoing descriptions. Details are not described herein again.

Optionally, when the at least one sensor is added to the surface of the first element 300, and the processor 100 obtains, via the at least one sensor, the pressing operation input by the user, because the processor 100 detects a change of a pressure value when the user inputs the rotation operation or the pressing operation, and when the user inputs the pressing operation via the first element 300, rotation of the first element 300 may also be caused, the processor 100 may combine the rotation angle and the pressure value of the first element 300, to comprehensively determine whether the rotation operation or the pressing operation is input by the user.

For example, in an implementation, an angle threshold and a second pressure threshold that correspond to the rotation operation, and a third pressure threshold corresponding to the pressing operation may be preset in the processor 100. After detecting that the user inputs an operation via the first element 300, the processor 100 may obtain a target rotation angle of the first element 300 and a target pressure value detected via the first element 300. The processor 100 determines whether the target rotation angle is greater than or equal to the angle threshold, and whether the target pressure value is greater than or equal to the first pressure value; and if both determining results are yes, it is determined that the operation input by the user is the rotation operation; or if either of determining results is no, it is determined that the operation input by the user is not the rotation operation. The processor 100 may further determine whether the target pressure value is greater than or equal to the second pressure value, and if a determining result is yes, it is determined that the operation input by the user is the pressing operation; or if a determining result is no, it is determined that the operation input by the user is not the pressing operation. If the processor 100 determines that the operation input by the user is neither the rotation operation nor the pressing operation, no operation may be triggered.

In another implementation, a second speed threshold and a second pressure threshold that correspond to the rotation operation, and a third pressure threshold corresponding to the pressing operation may be preset in the processor 100. After detecting that the user inputs an operation via the first element 300, the processor 100 may obtain a rotation speed of the first element 300 and a target pressure value detected via the first element 300. The processor 100 determines whether the rotation speed of the first element 300 is greater than or equal to a second speed threshold, and whether the target pressure value is greater than or equal to the first pressure value; and if both determining results are yes, it is determined that the operation input by the user is the rotation operation; or if either of determining results is no, it is determined that the operation input by the user is not the rotation operation. The processor 100 may further determine whether the target pressure value is greater than or equal to the second pressure value, and if a determining result is yes, it is determined that the operation input by the user is the pressing operation; or if a determining result is no, it is determined that the operation input by the user is not the pressing operation. If the processor 100 determines that the operation input by the user is neither the rotation operation nor the pressing operation, no operation may be triggered.

It should be noted that, the processor 100 may further determine, in another manner, whether the rotation operation or the pressing operation is input by the user. The examples herein are merely for ease of understanding this solution, and are not intended to limit this solution.

Optionally, in some application scenarios, after the processor 100 determines that the operation input by the user is the rotation operation or the pressing operation, in a process of obtaining the rotation operation or the pressing operation input by the user, the processor 100 may further re-identify, based on a preset frequency, the operation input by the user, to find in time whether the operation input by the user changes, for example, changes from the rotation operation to the pressing operation, or changes from the pressing operation to the rotation operation.

For example, when browsing information in the browsing interface, the user inputs the rotation operation to scroll the content in the browsing interface. After viewing the information, the user may trigger a voice reply function by inputting the pressing operation, and continue to input the pressing operation to perform voice input. After input ends, the user may trigger a sending function by using the forward rotation operation, and trigger a cancellation function by using the backward rotation operation. In this case, in the foregoing scenario, the operation input by the user needs to be re-identified based on the preset frequency, to find in time whether the operation input by the user changes. Specifically, specific scenarios in which the foregoing functions are set may be flexibly set with reference to an actual application product. This is not limited herein.

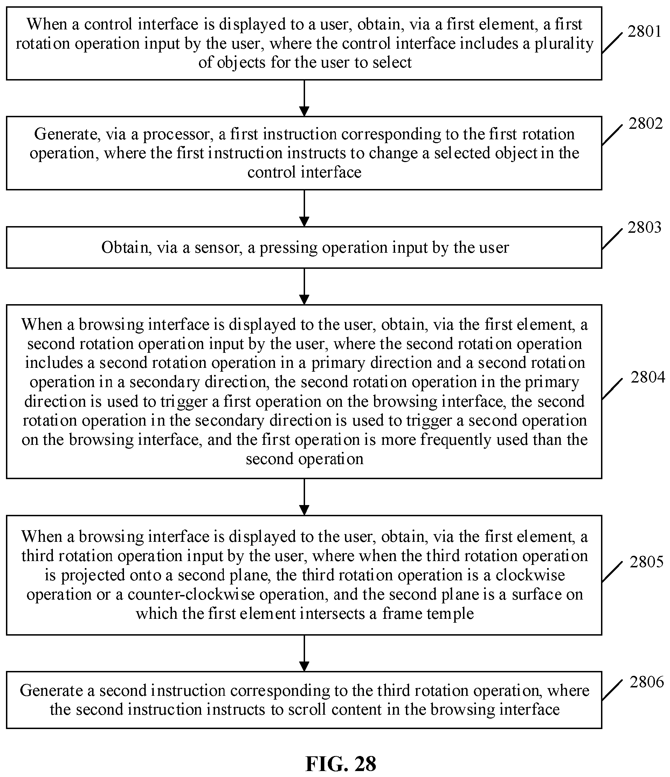

Optionally, based on embodiments corresponding to FIG. 1 to FIG. 27, an embodiment of this application further provides an instruction obtaining method. The method is applied to the glasses described in FIG. 1 to FIG. 27. The glasses include a first element disposed on a frame temple and a processor. FIG. 28 is a schematic flowchart of an instruction obtaining method according to an embodiment of this application. The instruction obtaining method provided in this embodiment of this application may include the following steps.

2801: When a control interface is displayed to a user, obtain, via the first element, a first rotation operation input by the user, where the control interface includes a plurality of objects for the user to select.

2802: Generate, via the processor, a first instruction corresponding to the first rotation operation, where the first instruction instructs to change a selected object in the control interface.

2803: Obtain, via a sensor, a pressing operation input by the user.

2804: When a browsing interface is displayed to the user, obtain, via the first element, a second rotation operation input by the user, where the second rotation operation includes a second rotation operation in a primary direction and a second rotation operation in a secondary direction, the second rotation operation in the primary direction is used to trigger a first operation on the browsing interface, the second rotation operation in the secondary direction is used to trigger a second operation on the browsing interface, and the first operation is more frequently used than the second operation.

2805: When a browsing interface is displayed to the user, obtain, via the first element, a third rotation operation input by the user, where when the third rotation operation is projected onto a second plane, the third rotation operation is a clockwise operation or a counter-clockwise operation, and the second plane is a surface on which the first element intersects the frame temple.

2806: Generate a second instruction corresponding to the third rotation operation, where the second instruction instructs to scroll content in the browsing interface.

In this embodiment of this application, steps 2803 to 2806 are all optional steps. For meanings of terms in steps 2803 to 2806 and specific implementations of each step, refer to descriptions in embodiments corresponding to FIG. 1 to FIG. 27. Details are not described herein again.

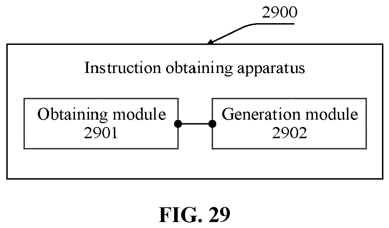

Based on embodiments corresponding to FIG. 1 to FIG. 28, to better implement the foregoing solutions in embodiments of this application, the following further provides a related device configured to implement the foregoing solutions. Specifically, FIG. 29 is a diagram of a structure of an instruction obtaining apparatus according to an embodiment of this application. The instruction obtaining apparatus 2900 may be used in the glasses described in FIG. 1 to FIG. 27. The glasses include a first element disposed on a frame temple and a processor. The instruction obtaining apparatus 2900 may include: an obtaining module 2901, configured to: when a control interface is displayed to a user, obtain, via the first element, a first rotation operation input by the user, where the control interface includes a plurality of objects for the user to select; and a generation module 2902, configured to generate a first instruction corresponding to the first rotation operation, where the first instruction instructs to change a selected object in the control interface.

In a possible design, the glasses further include a lens, the frame temple is connected to the lens through a second element, and a distance between the first element and the second element is greater than 0 millimeters and less than or equal to 40 millimeters.

In a possible design, the first element protrudes on a first side of the frame temple and does not protrude on a second side of the frame temple, the first side and the second side are respectively an upper side and a lower side of the frame temple, and a sensor is disposed on the second side of the frame temple. The obtaining module 2901 is further configured to obtain, via the sensor, a pressing operation input by the user.

In a possible design, the first element is a knob or a trackball.

In a possible design, the first element is a trackball, the control interface is displayed in a form of a sphere or a spheroid, and the plurality of objects are displayed on a surface of the sphere or the spheroid.

In a possible design, the first element is a trackball, and the first rotation operation includes a first rotation operation in a primary direction and a first rotation operation in a secondary direction; and the plurality of objects in the control interface include an object in a first direction and an object in a second direction, the first rotation operation in the primary direction is used to trigger scrolling of the object in the first direction, the first rotation operation in the secondary direction is used to trigger scrolling of the object in the second direction, and a quantity of objects in the first direction is greater than a quantity of objects in the second direction.

In a possible design, the first rotation operation in the primary direction corresponds to a first angle range for rotation of the trackball, the first rotation operation in the secondary direction corresponds to a second angle range for rotation of the trackball, and the first angle range is greater than the second angle range.

In a possible design, the first element is a trackball; and the obtaining module 2901 is further configured to: when a browsing interface is displayed to the user, obtain, via the first element, a second rotation operation input by the user, where the second rotation operation includes a second rotation operation in a primary direction and a second rotation operation in a secondary direction, the second rotation operation in the primary direction is used to trigger a first operation on the browsing interface, the second rotation operation in the secondary direction is used to trigger a second operation on the browsing interface, and the first operation is more frequently used than the second operation.

In a possible design, the obtaining module 2901 is further configured to: when a browsing interface is displayed to the user, obtain, via the first element, a third rotation operation input by the user, where when the third rotation operation is projected onto a second plane, the third rotation operation is a clockwise operation or a counter-clockwise operation, and the second plane is a surface on which the first element intersects the frame temple; and the generation module 2902 is further configured to generate a second instruction corresponding to the third rotation operation, where the second instruction instructs to scroll content in the browsing interface.

In a possible design, the first element is a knob, the knob includes two states: being closely attached to the frame temple and being pulled out from the frame temple, and when the knob is in different states of the two states, the knob is configured to obtain different instructions.

It should be noted that content such as information exchange or an execution process between the modules/units in the instruction obtaining apparatus 2900 is based on a same concept as embodiments corresponding to FIG. 1 to FIG. 27 in this application. For specific content, refer to descriptions in the foregoing method embodiments in this application. Details are not described herein again.

An embodiment of this application further provides a computer program product. When the computer program product runs on a computer, the computer is enabled to perform the steps executed by the glasses described in embodiments shown in FIG. 1 to FIG. 27.

An embodiment of this application further provides a computer-readable storage medium. The computer-readable storage medium stores a program for signal processing. When the program is run on a computer, the computer is enabled to perform the steps executed by the glasses in embodiments shown in FIG. 1 to FIG. 27.

The instruction obtaining apparatus, a terminal device, or a server provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs the instruction obtaining method described in embodiments described in FIG. 1 to FIG. 27. Optionally, the storage unit is a storage unit in the chip, for example, a register or a cache; or the storage unit may be a storage unit that is in a radio access device end and that is located outside the chip, for example, a read-only memory (read-only memory, ROM), another type of static storage device that can store static information and instructions, or a random access memory (random access memory, RAM).

The processor mentioned anywhere above may be a general-purpose central processing unit, a microprocessor, an ASIC, or one or more integrated circuits that are configured to control program execution of the method in the first aspect.

In addition, it should be noted that the described apparatus embodiment is merely an example. The units described as separate parts may or may not be physically separate, and parts displayed as units may or may not be physical units, may be located in one location, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in combination with necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, specific hardware structures used to achieve a same function may be in various forms, for example, in a form of analog circuit, digital circuit, or dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk drive, a ROM, a RAM, a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by using software, hardware, firmware, or any combination thereof. When software is used to implement embodiments, all or some of embodiments may be implemented in a form of computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (Solid State Disk, SSD)), or the like.

## Claims

1. Glasses, wherein the glasses comprise a first element disposed on a frame temple and a processor;
the first element is configured to: when a control interface is displayed to a user, obtain a first rotation operation input by the user, wherein the control interface comprises a plurality of objects for the user to select; and
the processor is configured to generate a first instruction corresponding to the first rotation operation, wherein the first instruction instructs to change a selected object in the control interface.

2. The glasses according to claim 1, wherein the glasses further comprise a lens, the frame temple is connected to the lens through a second element, and a distance between the first element and the second element is greater than 0 millimeters and less than or equal to 40 millimeters.

3. The glasses according to claim 1 or 2, wherein the first element protrudes on a first side of the frame temple and does not protrude on a second side of the frame temple, the first side and the second side are respectively an upper side and a lower side of the frame temple, and a sensor is disposed on the second side of the frame temple; and
the sensor is configured to obtain a pressing operation input by the user.

4. The glasses according to claim 1 or 2, wherein the first element is a knob or a trackball.

5. The glasses according to claim 1 or 2, wherein the first element is a trackball, the control interface is displayed in a form of a sphere or a spheroid, and the plurality of objects are displayed on a surface of the sphere or the spheroid.

6. The glasses according to claim 1 or 2, wherein the first element is a trackball, and the first rotation operation comprises a first rotation operation in a primary direction and a first rotation operation in a secondary direction; and
the plurality of objects in the control interface comprise an object in a first direction and an object in a second direction, the first rotation operation in the primary direction is used to trigger scrolling of the object in the first direction, the first rotation operation in the secondary direction is used to trigger scrolling of the object in the second direction, and a quantity of objects in the first direction is greater than a quantity of objects in the second direction.

7. The glasses according to claim 6, wherein the first rotation operation in the primary direction corresponds to a first angle range for rotation of the trackball, the first rotation operation in the secondary direction corresponds to a second angle range for rotation of the trackball, and the first angle range is greater than the second angle range.

8. The glasses according to claim 1 or 2, wherein the first element is a trackball; and
the first element is further configured to: when a browsing interface is displayed to the user, obtain, via the first element, a second rotation operation input by the user, wherein
the second rotation operation comprises a second rotation operation in a primary direction and a second rotation operation in a secondary direction, the second rotation operation in the primary direction is used to trigger a first operation on the browsing interface, the second rotation operation in the secondary direction is used to trigger a second operation on the browsing interface, and the first operation is more frequently used than the second operation.

9. The glasses according to claim 4, wherein
the first element is further configured to: when a browsing interface is displayed to the user, obtain, via the first element, a third rotation operation input by the user, wherein when the third rotation operation is projected onto a second plane, the third rotation operation is a clockwise operation or a counter-clockwise operation, and the second plane is a surface on which the first element intersects the frame temple; and
the processor is further configured to generate a second instruction corresponding to the third rotation operation, wherein the second instruction instructs to scroll content in the browsing interface.

10. The glasses according to claim 1 or 2, wherein the first element is a knob, the knob comprises two states: being closely attached to the frame temple and being pulled out from the frame temple, and when the knob is in different states of the two states, the knob is configured to obtain different instructions.

11. An instruction obtaining method, wherein the method is applied to glasses, the glasses comprise a first element disposed on a frame temple and a processor, and the method comprises:
when a control interface is displayed to a user, obtaining, via the first element, a first rotation operation input by the user, wherein the control interface comprises a plurality of objects for the user to select; and
generating, via the processor, a first instruction corresponding to the first rotation operation, wherein the first instruction instructs to change a selected object in the control interface.

12. The method according to claim 11, wherein the glasses further comprise a lens, the frame temple is connected to the lens through a second element, and a distance between the first element and the second element is greater than 0 millimeters and less than or equal to 40 millimeters.

13. The method according to claim 11 or 12, wherein the first element protrudes on a first side of the frame temple and does not protrude on a second side of the frame temple, the first side and the second side are respectively an upper side and a lower side of the frame temple, a sensor is disposed on the second side of the frame temple, and the method further comprises:
obtaining, via the sensor, a pressing operation input by the user.

14. The method according to claim 11 or 12, wherein the first element is a knob or a trackball.

15. The method according to claim 11 or 12, wherein the first element is a trackball, the control interface is displayed in a form of a sphere or a spheroid, and the plurality of objects are displayed on a surface of the sphere or the spheroid.

16. The method according to claim 11 or 12, wherein the first element is a trackball, and the first rotation operation comprises a first rotation operation in a primary direction and a first rotation operation in a secondary direction; and
the plurality of objects in the control interface comprise an object in a first direction and an object in a second direction, the first rotation operation in the primary direction is used to trigger scrolling of the object in the first direction, the first rotation operation in the secondary direction is used to trigger scrolling of the object in the second direction, and a quantity of objects in the first direction is greater than a quantity of objects in the second direction.

17. The method according to claim 16, wherein the first rotation operation in the primary direction corresponds to a first angle range for rotation of the trackball, the first rotation operation in the secondary direction corresponds to a second angle range for rotation of the trackball, and the first angle range is greater than the second angle range.

18. The method according to claim 11 or 12, wherein the first element is a trackball, and the method comprises:
when a browsing interface is displayed to the user, obtaining, via the first element, a second rotation operation input by the user, wherein
the second rotation operation comprises a second rotation operation in a primary direction and a second rotation operation in a secondary direction, the second rotation operation in the primary direction is used to trigger a first operation on the browsing interface, the second rotation operation in the secondary direction is used to trigger a second operation on the browsing interface, and the first operation is more frequently used than the second operation.

19. The method according to claim 14, wherein the method further comprises:
when a browsing interface is displayed to the user, obtaining, via the first element, a third rotation operation input by the user, wherein when the third rotation operation is projected onto a second plane, the third rotation operation is a clockwise operation or a counter-clockwise operation, and the second plane is a surface on which the first element intersects the frame temple; and
generating a second instruction corresponding to the third rotation operation, wherein the second instruction instructs to scroll content in the browsing interface.

20. The method according to claim 11 or 12, wherein the first element is a knob, the knob comprises two states: being closely attached to the frame temple and being pulled out from the frame temple, and when the knob is in different states of the two states, the knob is configured to obtain different instructions.

21. An instruction obtaining apparatus, wherein the instruction obtaining apparatus is used in glasses, the glasses further comprise a first element disposed on a frame temple, and the apparatus comprises:
an obtaining module, configured to: when a control interface is displayed to a user, obtain, via the first element, a first rotation operation input by the user, wherein the control interface comprises a plurality of objects for the user to select; and
a generation module, configured to generate a first instruction corresponding to the first rotation operation, wherein the first instruction instructs to change a selected object in the control interface.

22. A computer program product, wherein the computer program product comprises a program, and when the program is run on a computer, the computer is enabled to perform the method according to any one of claims 11 to 20.

23. A computer-readable storage medium, wherein the computer-readable storage medium stores a program, and when the program is run on a computer, the computer is enabled to perform the method according to any one of claims 11 to 20.
